# EUROPEAN PATENT APPLICATION

(11) **EP 3 576 420 A1**
(43) Date of publication of application: **04.12.2019**
(21) Application number: 18851176.0
(22) Date of filing: 24.08.2018
(51) Int. Cl.: H04N 21/4415, H04N 21/4627, H04N 21/485

(54) **INTELLIGENT SYSTEM ADJUSTING METHOD AND APPARATUS, AND COMPUTER READABLE STORAGE MEDIUM**

(30) Priority: 31.08.2017 CN 201710776656
(71) Applicant: Shenzhen Skyworth-RGB Electronic Co., Ltd., Shenzhen, Guangdong 518057 (CN)
(72) Inventor: YU, Minghuo, Shenzhen Guangdong 518057 (CN); WANG, Qi, Shenzhen Guangdong 518057 (CN)
(74) Representative: Osterhoff, Utz
(86) International application number: PCT/CN2018/102095
(87) International publication number: WO 2019/042220

(57) **Abstract**

Disclosed is a method for adjusting an intelligent system, which includes: judging whether portrait information matched with preset portrait information exists in an image to be processed on a terminal display interface; if yes, acquiring a character mode corresponding to the portrait information; pushing corresponding content information to the terminal display interface according to the character mode. The present disclosure also discloses a device for adjusting the intelligent system and a computer readable storage medium. The present disclosure can push different content information to different users based on the character modes, for improving the intelligence and personalization. User of higher permission level can manage the content information pushed to user of lower permission level conveniently through setting the permission levels for users, thereby improving the safety of the content information pushed to user of lower level.

## Description

### TECHNICAL FIELD

The present disclosure relates to the technical field of television, and in particular, to a method and a device for adjusting an intelligent system, and a computer readable storage medium.

### BACKGROUND

Televisions have become increasingly intelligent with evolving of intelligence. Smart TVs are endowed with various operation functions, for displaying abundant contents to users. Therefore, smart TVs are widely favored by modern consumers.

Despite the intelligence, smart TV still cannot generate personalized and customized interface according to user's identity. That is, it cannot intelligently provide varying displaying contents for different audiences. Many aging people do not know how to operate the smart TV and how to find the program they watched last time upon turning on the smart TV again. While, for families with children, it is rather simple for children to watch TV programs. And the parents, who would like torestrict the screen contents for their children, may also do not know how to operate the television.

The contents above are only intended to assist in understanding the technical solution of the present disclosure, but not to represent the related art.

### SUMMARY

It is therefore one main objective of the disclosure to provide a method and a device for adjusting an intelligent system, and a computer readable storage medium, aiming to solve the problem that the current smart TV cannot provide simple intelligent services for different users.

In order to achieve the above objective, the present disclosure provides a method for adjusting an intelligent system, which includes the following operations:
judging whether portrait information matched with preset portrait information exists in an image to be processed on a terminal display interface;
if yes, acquiring a character mode corresponding to the portrait information; and
pushing corresponding content information to the terminal display interface according to the character mode.

In one embodiment, after the operation of acquiring a character mode corresponding to the portrait information, the method further includes:
acquiring permission levels respectively corresponding to a current character mode and a target character mode, on condition that a restricted operation request is received; and
in response to the permission level of the current character mode higher than that of the target character mode, acquiring restriction information corresponding to the restriction operation request, and determining that the current character mode is the target character mode on condition that the restriction information exists in the content information corresponding to the current character mode, and the operation of pushing corresponding content information to the terminal display interface according to the character mode includes: pushing second content information corresponding to the target character mode to the terminal display interface.

In one embodiment, the operation of acquiring permission levels respectively corresponding to a current character mode and a target character mode, on condition that a restricted operation request is received, includes:
acquiring operation permission information of the current character mode and the target permission information of the target character mode corresponding to the restriction operation request, on condition that the restriction operation request is received; and
acquiring the permission levels respectively corresponding to the current character mode and the target character mode based on the operation permission information and the target permission information.

In one embodiment, the operation of pushing corresponding content information to the terminal display interface according to the character mode, includes:
pushing first content information corresponding to the character mode to the terminal display interface on condition that the restriction information is determined not existed in the content information corresponding to the character mode; and
pushing second content information corresponding to the character mode to the terminal display interface on condition that restriction information is determined existed in the content information corresponding to the character mode.

In one embodiment, after the operation of judging whether portrait information matched with preset portrait information exists in an image to be processed on a terminal display interface, the method further includes:
acquiring a latest character mode on condition that no portrait information exists matched with the preset portrait information in the image to be processed; and
pushing the corresponding content information to the terminal display interface according to the latest character mode.

In one embodiment, the operation of judging whether portrait information matched with preset portrait information exists in an image to be processed on a terminal display interface, includes:
acquiring a matching degree of first portrait information in the image to be processed and the preset portrait information; and
determining that portrait information matching with the preset portrait information exists in the image to be processed, on condition that the matching degree is greater than a preset matching degree.

In one embodiment, the operation of acquiring a matching degree of first portrait information in the image to be processed and the preset portrait information, includes:
acquiring the preset portrait information on condition that the first portrait information is determined existed in the image to be processed; and
acquiring the matching degree of the first portrait information and the preset portrait information based on the preset portrait information.

In one embodiment, the operation of acquiring the preset portrait information on condition that the first portrait information is determined existed in the image to be processed, includes:
updating times of the detecting unknown portrait information on condition that the unknown portrait information is detected; and
updating the preset portrait information based on the unknown portrait information, on condition that a quantity of the times of the detecting unknown portrait information is greater than a preset quantity.

In addition, in order to achieve the above objective, the present disclosure also provides a device for adjusting intelligent system, which includes a memory, a processor and a program for adjusting intelligent system stored on the memory and executable on the processor. The program, when executed by the processor, implements the operations of the method for adjusting intelligent system as described above.

In addition, in order to achieve the above object, the present disclosure also provides a computer readable storage medium on which a program for adjusting intelligent system is stored. The program, when executed by a processor, implements the operations of the method for adjusting intelligent system as described above.

According to the present disclosure, whether the portrait information matched with preset portrait information exists in the image to be processed is judged. If yes, the character mode corresponding to the portrait information is acquired. And corresponding content information is pushed to the terminal display interface according to the character mode. So that different content information can be pushed to different users based on the character modes, for improving the intelligence and personalization. And through setting the permission levels, users of a higher level can better manage the content information pushed to user of a lower level, thereby improving the safety of content information pushed to user of a lower level.

### BRIEF DESCRIPTION OF THE DRAWINGS

FIG. 1 is a schematic structural diagram of a terminal in a hardware operating environment according to an embodiment of the present disclosure, in which a device for adjusting intelligent system belongs to the terminal;
FIG. 2 is a flow chart of a method for adjusting an intelligent system according to a first embodiment of the present disclosure;
FIG. 3 is a flow chart of a method for adjusting an intelligent system according to a second embodiment of the present disclosure;
FIG. 4 is a detailed flow chart of an operations of acquiring permission levels respectively corresponding to a current character mode and a target character mode when a restriction operation request is received, in the method for adjusting the intelligent system according to the second embodiment of the present disclosure;
FIG. 5 is a detailed flow chart of an operation of pushing corresponding content information to the terminal display interface according to the character mode, in the method for adjusting the intelligent system according to the first embodiment of the present disclosure;
FIG. 6 is a flow chart of a method for adjusting an intelligent system according to a fifth embodiment of the present disclosure;
FIG. 7 is a detailed flow chart of an operation of judging whether portrait information matched with preset portrait information exists in an image to be processed, in the method for adjusting the intelligent system according to the first embodiment of the present disclosure;
FIG. 8 is a detailed flow chart of an operation of acquiring a matching degree of first portrait information in the image to be processed and the preset portrait information, in a method for adjusting an intelligent system according to a sixth embodiment of the present disclosure;
FIG. 9 is a flow chart of a method for adjusting an intelligent system according to an eight embodiment of the present disclosure.

The realization of the aim, functional characteristics, advantages of the present disclosure are further described specifically with reference to the accompanying drawings and embodiments.

### DETAILED DESCRIPTION OF THE EMBODIMENTS

It is to be understood that, the exemplary embodiments of the present disclosure are used for illustrating the present disclosure rather than restricting the present disclosure.

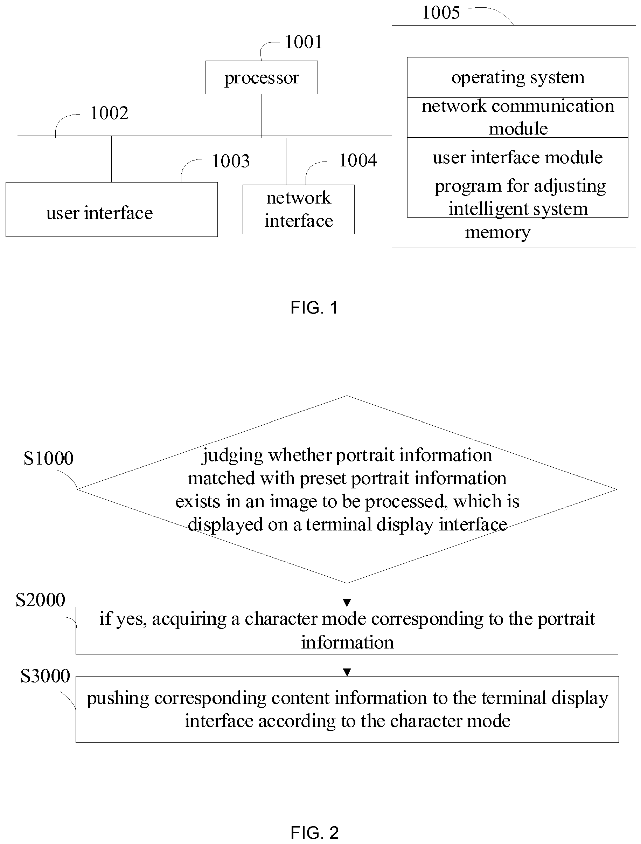

As shown in FIG. 1, FIG. 1 shows a schematic structural diagram of a terminal in a hardware operating environment according to an embodiment of the present disclosure, in which a device for adjusting intelligent system belongs to the terminal.

In the embodiment of the present disclosure, the terminal may be a PC, or a mobile terminal device with display function such as a smart phone, a tablet computer, an e-book reader, a Moving Picture Experts Group Audio Layer III (MP3) player, a Moving Picture Experts Group Audio Layer IV (MP4) player, a portable computer, etc.

As shown in FIG. 1, the terminal may include a processor 1001, such as a CPU, a network interface 1004, a user interface 1003, a memory 1005, and a communication bus 1002. The communication bus 1002 is configured to realize connections and communications among these components. The user interface 1003 may include a display, an input unit such as a keyboard. Optionally, the user interface 1003 may also include a standard wired interface, a wireless interface. The network interface 1004 may optionally include a standard wired interface, a wireless interface (such as a WI-FI interface). The memory 1005 may be a high-speed RAM memory or a non-volatile memory such as a disk memory. The memory 1005 may alternatively be a storage device independent of the aforementioned processor 1001.

Optionally, the terminal may further include a camera, a Radio Frequency (RF) circuitry, a sensor, an audio circuitry, a WiFi module, etc. The sensor can include light sensor, motion sensor, and the like. Specifically, the light sensor may include an ambient light sensor and a proximity sensor. The ambient light sensor may adjust the brightness of the display screen according to the brightness of ambient light, and the proximity sensor may turn off the display screen and/or backlight when the mobile terminal moves to the ear. The gravity acceleration sensor, which is regarded as a kind of motion sensor, can detect the magnitudes of accelerations in all directions (generally including X axis, Y axis, and Z axis). The gravity acceleration sensor can also detect the magnitude and direction of gravity when the terminal is still. As such the gravity acceleration sensor can be applied to application for identifying attitude of mobile terminal (such as an application for switching between horizontal orientation and vertical orientation, an application related to game, an application for calibrating attitude of magnetometer), can also be applied to application for identifying vibration (such as pedometer, tapping), etc. Of course, the mobile terminal can also be equipped with gyroscope, barometer, hygrometer, thermometer, infrared sensor, and the like, which is not described repeatedly herein.

Those skilled in the art can understand that the structure as shown in FIG. 1 does not constitute a limitation on the terminal, and the terminal may include more or fewer components than shown, or a combination of some components, or different components.

As shown in FIG. 1, the memory 1005 which is regarded as a computer storage medium may include an operating system, a network communication module, a user interface module, and a program for adjusting intelligent system.

In the terminal as shown in FIG. 1, the network interface 1004 is mainly configured to connect with a background server and perform data communication with the background server. The user interface 1003 is mainly configured to connect with a client (such as a user end) and perform data communication with the client. The processor 1001 may be configured to call the program for adjusting the intelligent system stored on the memory 1005.

Based on the above hardware structure of the terminal, the present disclosure provides various embodiments.

The present disclosure provides a method for adjusting an intelligent system. Referring to FIG. 2, which shows a flow chart of the method for adjusting the intelligent system according to a first embodiment of the present disclosure.

In the embodiment, the method for adjusting the intelligent system includes:
S1000, judging whether portrait information matched with preset portrait information exists in an image to be processed, which is displayed on a terminal display interface.

In the embodiment, the camera or recorder can be defined on the device and configured to acquire the image to be processed. After the user starts the device, the camera or recorder on the device is also turned on, and a camera window is exposed meanwhile to photograph objects within a defined range during a preset photographing time. The photographed image displayed on the terminal display interface is defined as the image to be processed. In which, the preset photographing time can be set by user. The preset portrait information is internally stored portrait information, and the preset portrait information can be set by user, and user may preset at least one portrait. Or the preset portrait information can be automatically set according to times of detecting portrait information. Specifically, after the image to be processed is collected by the camera or recorder, the device acquires the image to be processed, then the image to be processed is algorithmically analyzed based on characteristic data. That is, whether portrait information exists in the image to be processed is analyzed, and the portrait information is regarded as first portrait information. When it is determined that the first portrait information exists in the image to be processed, the preset portrait information which is stored in the device is acquired, and the matching degree and preset matching degree respectively corresponding to the portrait information and the preset portrait information are acquired based on the preset portrait information. If the matching degree is greater than the preset matching degree, it means that the portrait information matching with the preset portrait information exists in the image to be processed. If the matching degree is less than the preset matching degree, it means that the portrait information matching with the preset portrait information does not exist in the image to be processed.

Particularly, if the internally stored preset portrait information cannot be obtained when it is determined that the image to be processed includes the first portrait information, a prompt interface is generated and pushed to the terminal display interface to prompt user whether to set the preset portrait information. Specifically, if the user selects to set the preset portrait information, the camera or recorder is turned on again to obtain the preset image to be processed including the preset portrait information. The preset portrait information in the preset image to be processed is acquired, and the portrait characteristic information in the preset portrait information is extracted, and the character mode corresponding to the preset portrait information is determined based on the portrait characteristic information. For example, various character modes which are divided according to age stages can be determined based on the portrait characteristic information. Meanwhile, the user can also customize the character modes corresponding to the portrait information and modify the automatically acquired character mode. After the character mode corresponding to the portrait information is determined, the unique identification number corresponding to the portrait information and the mode number of the character mode corresponding to the portrait information are generated and stored. If the user does not choose and set the preset portrait information, the default content information is directly pushed to the terminal display interface, and the portrait information in the image to be processed is unknown portrait information. The times of detecting the unknown portrait information are sequentially updated thereafter, when the times reach a preset times, the unknown portrait information can be set as the preset portrait information, and the character mode corresponding to the preset portrait information is judged and stored.

S2000, if yes, acquiring a character mode corresponding to the portrait information.

In the embodiment, since different character modes correspond to different content information, when it is determined that the portrait information matching with the preset portrait information exists in the image to be processed, the corresponding character mode can be obtained through the portrait information, thereby pushing the corresponding content information to user according to the character mode. If the portrait information matching with the preset portrait information does not exist in the image to be processed, the latest character mode is acquired, and the corresponding content information is pushed to the terminal display interface according to the latest character mode. Specifically, the character model can be divided into many types according to age stage, including children model, adult model, and elderly model. When it is determined that the portrait information matched with preset portrait information exists in the image to be processed, the identification number of the preset portrait information, and the stored mode number of the character mode corresponding to the preset portrait information is also acquired, the identification number is a unique number for each preset portrait information, the mode number is a number corresponding to each character mode. Different portrait information can correspond to the same or different character modes, and the character mode corresponding to the preset character information can be determined according to the mode number. In addition, different character modes also have different operation permission levels. For the character modes with different permission levels have different restriction permissions. Specifically, the restriction permission is expressed in that the character mode of higher level can restrict the content information pushed to the character mode of lower level.

S3000, pushing corresponding content information to the terminal display interface according to the character mode.

In the embodiment, when the content information corresponding to the character mode is acquired, it is necessary to judge whether there is restriction information in the content information corresponding to the character mode, the restriction information is the content information which is restricted to push to the character mode. Specifically, when the current character mode corresponding to the portrait information is obtained, if the user selects to carry out a restriction operation in the current character mode, a restriction operation request is triggered. When the restriction operation request is required, the operation restriction information of the current character mode, and the target permission information of the target character mode corresponding to the restriction operation request are acquired. According to the operation permission information and the target permission information, the permission levels respectively corresponding to the current character mode and the target character mode are acquired. If it is determined that the current character mode has higher permission than the target character mode, the restriction information corresponding to the restriction operation request is acquired, and the restriction operation corresponding to the operation permission is carried out on the target character mode according to the restriction information, to obtain the second content information corresponding to the target character mode. If the permission level of the current character mode is lower than or equal to that of the target character mode, user's restriction operation request is rejected.

If the restriction information does not exist in the content information corresponding to the current character mode, the first content information corresponding to the current character mode is pushed to the terminal display interface. The first content information is the original content information corresponding to each character mode. If the restriction information exists in the content information corresponding to the current character mode, the second content information is pushed to the terminal display interface, and the second content information is content information excluding the restriction information from the first content information.

According to the method for adjusting the intelligent system provided by the embodiment, whether the portrait information matched with the preset portrait information exists in the image to be processed which is displayed on the terminal display interface is judged. If yes, the character mode corresponding to the portrait information is obtained, and then corresponding content information is pushed to the terminal display interface according to the character mode. So that different content information can be pushed to different users based on the character modes, for improving the intelligence and personalization. And through setting the permission levels, users of a higher level can better manage the content information pushed to user of a lower level, thereby improving the safety of content information pushed to user of a lower level.

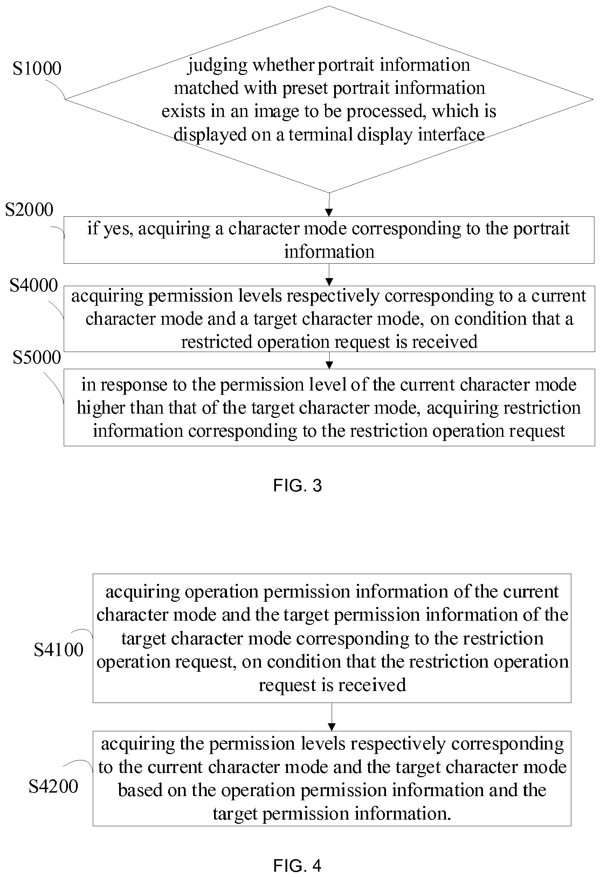

Based on the first embodiment, the present disclosure provides a method for adjusting an intelligent system according to a second embodiment. Referring to FIG. 3, in the embodiment, after S2000, the method further includes:

S4000, acquiring permission levels respectively corresponding to a current character mode and a target character mode, on condition that a restricted operation request is received.

In the embodiment, different character modes have different permission levels. When user selects to perform restriction operation, only the character mode of higher permission level is allowed to perform restriction operation on the character mode of lower permission level. The character mode can be divided into the current character mode and the target character mode according to the operation state. Therefore, the permission levels respectively corresponding to the current character mode and the target character mode are acquired on condition that the restriction operation request is received. The restriction operation request is an operation request triggered when user selects to perform a restriction operation on the target character mode under the current character mode. Specifically, the operation permission information corresponding to the current character mode and the target permission information corresponding to the target character mode are respectively obtained, when the restriction operation request is acquired. The operation permission information and the target permission information can be analyzed to obtain the permission levels corresponding to the current character mode and the target character mode respectively.

S5000, in response to the permission level of the current character mode higher than that of the target character mode, acquiring restriction information corresponding to the restriction operation request, and determining that the current character mode is the target character mode on condition that the restriction information exists in the content information corresponding to the current character mode, and the operation of pushing corresponding content information to the terminal display interface according to the character mode includes: pushing second content information corresponding to the target character mode to the terminal display interface.

In the embodiment, the current character mode restricts part of the content information of the target character mode, to define the restriction information. When it is determined that the permission level of the current character mode is higher than that of the target character mode, the restriction information is obtained, meanwhile the first content information corresponding to the target character mode is also obtained. The restriction information is screened out from the first content information corresponding to the target character mode, so that the second content information corresponding to the target character mode can be obtained. The second content information is the content information after excluding the restriction information from the first content information corresponding to the target character mode. After that, it is determined that the current character mode is the target character mode when it is determined that the restriction information exists in the content information corresponding to the current character mode. The content information other than the restriction information (i.e., the second content information corresponding to the second character mode) is pushed to the terminal display interface.

For example, the permission level of the adult mode in the smart TV is higher that of the child mode. When the character mode corresponding to the acquired portrait information is the adult mode, user in the adult mode can select to restrict the operation of child in the child mode, to limit the push of program A to child in the child mode. At this time, the restriction operation request corresponding to the adult mode is triggered, the child mode is the second character mode, and the program A is the restriction information. On condition that the restriction operation request is received, the operation restriction information corresponding to the adult mode and target permission information corresponding to the child mode are acquired. The operation restriction information and the target permission information are analyzed to obtain the corresponding permission levels. When it is determined that the permission level of the adult mode is higher than that of the child mode, the restriction information corresponding to the restriction operation request (i.e.,, program A) is acquired. Then the program A is excluded from the program corresponding to the child mode to obtain the program without program A, and the program content of the program without program A is regarded as the second content information corresponding to the child mode. The original program content (including program A) corresponding to the child mode is the first content information. After that, if it is detected that the character mode is the child mode, it can be determined that there is restriction information in the content information corresponding to the child mode, and then the second content information corresponding to the child mode is pushed to the terminal display interface.

In the method for adjusting the intelligent system provided by the embodiment, the permission levels corresponding to the current character mode and the target character mode are acquired respectively, when the restriction operation request is acquired. The restriction information corresponding to the restriction operation request is acquired when it is determined that the permission level of the current character mode is higher than that of the target character mode. It is determined that the current character mode is the target character mode, on condition that the restriction information exists in the content information corresponding to the current character mode. The operation of pushing the corresponding content information to the terminal display interface according to the character mode includes: pushing the second content information corresponding to the target character mode to the terminal display interface, for performing the restriction operation on the target character mode. The content information corresponding to the character mode of lower level can be restricted by the character mode of higher level, for providing more accurate services to various different types of users, thereby improving the personalization and intelligence.

Based on the second embodiment, the present disclosure provides a method for adjusting an intelligent system according to a third embodiment. Referring to FIG. 4, in the embodiment, S4000 includes:
S4100, acquiring operation permission information of the current character mode and the target permission information of the target character mode corresponding to the restriction operation request, on condition that the restriction operation request is received.

In the embodiment, the character mode of higher level may perform the restriction operation on the character mode of lower level, that is, the push of the content information corresponding to the second character mode can be restricted by the restriction operation. Specifically, the character mode corresponding to the portrait information is obtained, when the portrait information matched with preset portrait information exists in an image to be processed, and the character mode corresponding to the portrait information is regarded as the current character mode. When the current character mode is acquired, user can select whether to carry out the restriction operation under the current character mode. If user selects to carry out the restriction operation, the restriction operation request is triggered, and the restriction operation request is an operation request for restricting the content information of the target character mode. The operation permission information corresponding to the current character mode and target permission information of the target character mode are acquired, when the restriction operation request is required. The operation permission information includes the current character mode and the permission level corresponding to the current character mode. The target permission information includes the target character mode and the permission level corresponding to the target character mode. According to the operation permission information and the target permission information, the permission levels respectively corresponding to the current character mode and the target character mode can be obtained.

S4200, acquiring the permission levels respectively corresponding to the current character mode and the target character mode based on the operation permission information and the target permission information.

In the embodiment, the operation permission information is permission information of the character mode which is configured to send out the restriction operation request. The target permission information is permission information corresponding to the restriction operation request. The permission level of the current character mode corresponding to the operation permission information can be obtained through analyzing the operation permission information. The permission level of the target character mode corresponding to the target permission information can be obtained by analyzing the target permission information. Then the obtained permission level of the current character mode is compared with the obtained permission level of the target character mode, and if the permission level of the current character mode is determined to be higher than the permission level of the target character mode, the current character mode can be allowed to perform the restriction operation on the target character mode. If it is determined that the permission level of the current character mode is lower than or equal to the permission level of the target character mode, the current character mode cannot be allowed to perform the restriction operation on the target character mode.

In the method for adjusting the intelligent system provided by the embodiment, the operation restriction information of the current character mode and the target permission information of the target character mode corresponding to the restriction operation request are acquired, on condition that the restriction operation request is received. Then the permission levels respectively corresponding to the current character mode and the target character mode are acquired based on the operation restriction information and the target permission information, for determining the permission of the character mode on condition that the restriction operation request is received, and improving the security for performing the restriction operation by assigning the character modes with different permission levels.

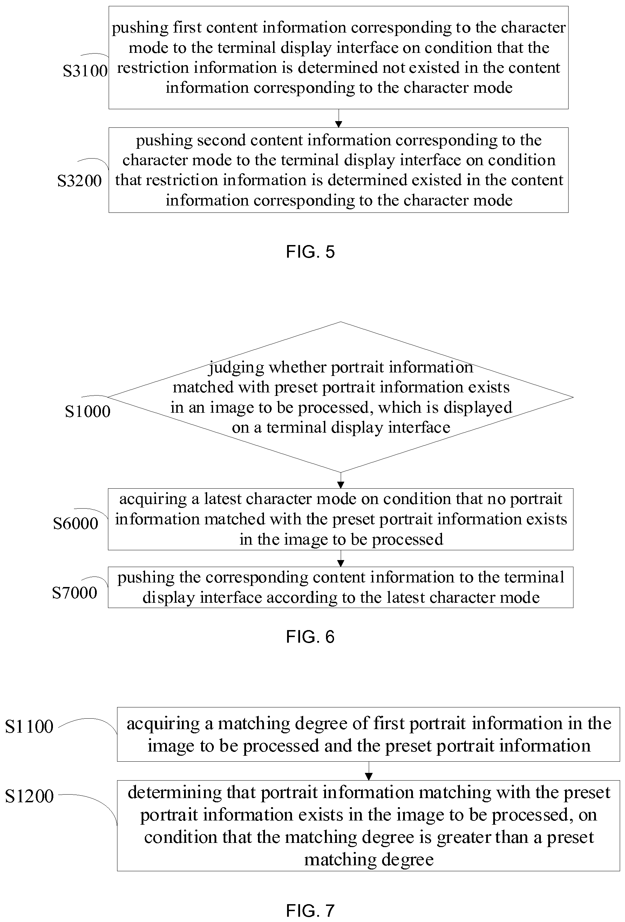

Based on the first embodiment, the present disclosure provides a method for adjusting an intelligent system according to a fourth embodiment. Referring to FIG. 5, in the embodiment, S3000 includes:
S3100, pushing first content information corresponding to the character mode to the terminal display interface on condition that the restriction information is determined not existed in the content information corresponding to the character mode.

In the embodiment, the first content information is the original content information corresponding to each character mode, and the restriction information is the content information restricted by the character mode. Because not all content information is suitable for the character mode corresponding to the portrait information in the detected image to be processed, user of higher level can restrict the content information corresponding to the target character mode by setting the restriction information of the target character mode. Specifically, the character mode corresponding to the portrait information is obtained, when it is determined that the portrait information in the image to be processed is successfully matched with the preset portrait information. Meanwhile, whether the restriction information exists in the content information corresponding to the character mode is judged. If yes, the content information other than the restriction information (i.e., the second content information) is pushed to the terminal display interface. If not, it means that the content information corresponding to the character mode of lower level has not been restricted by the character mode of higher level before, and the first content information corresponding to the character mode is pushed to the terminal display interface.

S3200, pushing second content information corresponding to the character mode to the terminal display interface on condition that restriction information is determined existed in the content information corresponding to the character mode.

In the embodiment, the restriction information is excluded from the first content information to form the second content information. If the user with the highest level restricts relevant content information contained in the content information corresponding to the target character mode, the restricted content information is defined as the restriction information of the target character mod. When it is determined that there is restriction information in the content information corresponding to the character mode, the content information excluding the restriction information (i.e., the second content information) is pushed to the terminal display interface. For example, for the smart TV, the user in the adult mode has the maximum operation permission. When the character mode, which is obtained by the smart TV and corresponding to the portrait information in the image to be processed, is the child mode, it is necessary to judge whether there is a restricted program in the program corresponding to the child mode, and the restricted program is regarded as the restriction information. If the user in the child mode restricts the content of the program corresponding to the child mode, and the restricted program is prevented from being pushed to child. The restricted program can not be pushed to child when the program is pushed to child in the child mode, and only the programs other than the restricted program (i.e., the second content information) can be pushed. If the user in the adult mode does not restrict the content of the program corresponding to the child mode, the program corresponding to the child mode (i.e., the first content information) can be directly pushed when it needs to push the program in the child mode.

According to the method for adjusting the intelligent system provided by the embodiment, when it is determined that the restriction information does not exist in the content information corresponding to the character mode, the first content information corresponding to the character mode is pushed to the terminal display interface; when it is determined that the restriction information exists in the content information corresponding to the character mode, the second content information corresponding to the character mode is pushed to the terminal display interface. So that, different content information can be pushed to different character modes, meanwhile, the content information can be pushed to user in a much more personalized way through the setting of the restriction information, for improving the intelligence.

Based on the first embodiment, the present disclosure provides a method for adjusting an intelligent system according to a fifth embodiment. Referring to FIG. 6, in the embodiment, after S1000, the method further includes:

S6000, acquiring a latest character mode on condition that no portrait information matched with the preset portrait information exists in the image to be processed.

In the embodiment, since the stored preset portrait information is incomplete, when there is portrait information in the image to be processed, the stored preset portrait information may do not matched with the portrait information. Therefore, when the portrait information does not match with the preset portrait information, it only needs to push the content information corresponding to the stored latest character mode. Specifically, whether the portrait information matching with the preset portrait information exists in the image to be processed is judged, if not, the stored latest character mode is acquired, and the content information corresponding to the latest character mode is acquired.

S7000, pushing the corresponding content information to the terminal display interface according to the latest character mode.

In the embodiment, the latest character mode is the character mode before the power is turned on. The character mode may be stored each time the content information is pushed to corresponding character mode. Therefore, the latest character mode is obtained when it is determined that the portrait information matching with the preset portrait information does not exist in the image to be processed, and the corresponding latest content information can be obtained according to the character mode. The latest content information is pushed to the terminal display interface when the latest content information is obtained.

According to the method for adjusting the intelligent system provided by the embodiment, when the portrait information matched with the preset portrait information does not exist in the image to be processed, the latest portrait mode is obtained. Then the corresponding content information is pushed to the terminal display interface according to the latest portrait mode. So that the method can also process the portrait information in the image to be processed when the portrait information does not match with the preset portrait information, for expanding the processing range of the portrait information, and improving the intelligence and user experience.

Based on the first embodiment, the present disclosure provides a method for adjusting an intelligent system according to a sixth embodiment. Referring to FIG. 7, in the embodiment, S1000 includes:
S1100, acquiring a matching degree of first portrait information in the image to be processed and the preset portrait information.

In the embodiment, the first portrait information is the portrait information in the image to be processed, and the first portrait information may be successfully matched with the preset portrait information or may be failed to match with the preset portrait information. When it is determined that the portrait information in the image to be processed matches with the preset portrait information, it is first necessary to judge whether the first portrait information exists in the image to be processed. If the first portrait information does not exist in the image to be processed, it is not necessary to obtain the matching degree between the first portrait information in the image to be processed and preset portrait information. If the first portrait information exists in the image to be processed, the matching degree between the first portrait information in the image to be processed and the preset portrait information is acquired, and the matching degree is expressed as a degree of match between the portrait information and the preset portrait information. Specifically, the portrait characteristic information of the first portrait information is extracted, when it is determined that the first portrait information exists in the image to be processed. The matching degree is obtained through matching the portrait characteristic information with the characteristic information of the preset portrait information. Whether the portrait information matching with the preset portrait information exists in the image to be processed can be determined according to the matching degree.

S1200, determining that portrait information matching with the preset portrait information exists in the image to be processed, on condition that the matching degree is greater than a preset matching degree.

In the embodiment, the preset matching degree is a preset matching threshold. That is, whether a threshold value of the portrait information matching with the preset portrait information exists in the image to be processed is judged, and whether the portrait information matching with the preset portrait information exists in the image to be processed can be determined according to the preset matching degree. If the obtained matching degree is greater than the preset matching degree, the portrait information is successfully matched with the preset portrait information, and it is determined that the portrait information matched with the preset portrait information exists in the image to be processed. If the obtained matching degree is less than the preset matching degree, the portrait information is failed to match with the preset portrait information, and it is determined that the portrait information matched with the preset portrait information does not exist in the image to be processed.

According to the method for adjusting the intelligent system provided by the embodiment, the matching degree between the first portrait information in the image to be processed and the preset portrait information is obtained. It is determined that the portrait information matching with the preset portrait information exists in the image to be processed, when the matching degree is greater than the preset matching degree. So that whether the portrait information exists in the image to be processed is determined, the images to be processed which do not need personalized processing are screened, for simplifying the processing operations, and improving the efficiency.

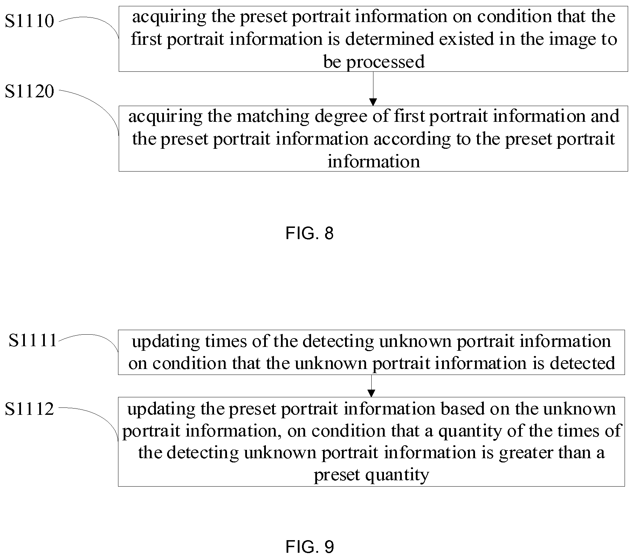

Based on the sixth embodiment, a seventh embodiment of the method for adjusting the intelligent system of the present disclosure is proposed. Referring to FIG. 8, in the embodiment, S1100 includes:
S1110, acquiring the preset portrait information on condition that the first portrait information is determined existed in the image to be processed.

In the embodiment, the image to be processed is captured by camera or recorder. The image to be processed does not necessarily include the first portrait information, so it is necessary to judge whether the image to be processed contains the first portrait information, when the image to be processed is acquired. If yes, it is necessary to judge the matching degree between the first portrait information and the preset portrait information. If not, there is no need to judge the matching degree between the first portrait information and the preset portrait information. Specifically, the image to be processed is subjected to a characteristic data analysis through an algorithm, when the image to be processed is acquired. Whether the portrait information exists in the image to be processed can be judged through the characteristic data. The characteristic data includes histogram characteristic, color characteristic, template characteristic, structural characteristic and the like, and the characteristic data can be configured for detecting and analyzing the portrait information. When it is determined that the first portrait information exists in the image to be processed, the preset portrait information is obtained, and the matching degree between the first portrait information and the first preset portrait information is obtained based on the preset portrait information.

In addition, if the user selects the user-defined character mode within the preset shooting time, the shooting window is closed for stopping acquiring the image to be processed. The corresponding content information can be directly pushed according to the user-defined character mode. If the obtained portrait information corresponds to at least two kinds of character modes, it is not necessary to push corresponding content information according to the character modes corresponding to the character information, the default content information is acquired and pushed to the terminal display interface. The default information is internal default content information or content information generated according to operation push habits.

S1120, acquiring the matching degree of first portrait information and the preset portrait information according to the preset portrait information.

In the embodiment, the matching degree indicates a degree of match between the portrait information and the preset portrait information. After the image to be processed is analyzed, if it is determined that the first portrait information exists in the image to be processed, the preset portrait information is acquired. The matching degree between the first portrait information and the preset portrait information is obtained based on the preset portrait information, and the portrait information is stored. Specifically, the first portrait characteristic information of the first portrait information, and the second portrait characteristic information of the preset portrait information are respectively extracted, and the first portrait characteristic information is compared to the second portrait characteristic information, the similarity between the first portrait characteristic information and the second portrait characteristic information is regarded as the matching degree between the first portrait information and the preset portrait information. When the matching degree between the first portrait information and the preset portrait information is acquired, the matching degree of the image to be processed is compared with the preset matching degree of the preset portrait information. When the matching degree is greater than the preset matching degree, it means that the portrait information matched with the preset portrait information exists in the image to be processed. After the image to be processed is analyzed, and the first portrait information does not exist in the image to be processed, the corresponding content information can be pushed directly to user according to the latest remembered human pattern.

In the method for adjusting the intelligent system provided by the embodiment, the preset portrait information is acquired when it is determined that the first portrait information exists in the image to be processed. Then the matching degree between the first portrait information and the preset portrait information is acquired based on the preset portrait information. So that whether the portrait information exists in the image to be processed is determined, the images to be processed which do not need personalized processing are screened, for simplifying the processing operations, and improving the efficiency.

Based on the above embodiments, the present disclosure provides a method for adjusting an intelligent system according to an eighth embodiment. Referring to FIG. 9, in the embodiment, S1110 includes:
S1111, updating times of the detecting unknown portrait information on condition that the unknown portrait information is detected.

In the embodiment, when the user does not set the preset portrait information or the detected portrait information in the image to be processed does not match with the preset portrait information, the detected portrait information is regarded as the unknown portrait information at this time, and the times of detecting the unknown portrait information are updated and stored. Specifically, if the detected unknown portrait information has been detected before, the times of detecting the unknown portrait information are updated. If the detected unknown portrait information has not been detected before, the detected unknown portrait information is newly stored as the unknown portrait information, and the detected unknown portrait information is numbered and stored. That is, the internally stored preset portrait information has its corresponding unique number. On condition that the unknown portrait information is detected for the second time or multiple times, the times of detecting the unknown portrait information (i.e., the detecting times) is sequentially updated.

S1112, updating the preset portrait information based on the unknown portrait information, on condition that a quantity of the times of the detecting unknown portrait information is greater than a preset quantity.

In the embodiment, the preset portrait information can be set by user or set passively, and the preset times of the unknown portrait information can be set to passively set the preset portrait information. Specifically, the unknown portrait information is updated to the preset portrait information, when the times of detecting the unknown portrait information are greater than the preset times. That is, the unknown portrait information is also taken as the preset portrait information, and the unknown portrait information can also be taken as a matching condition for the preset portrait information during the process of matching the portrait information in the image to be processed with the preset portrait information thereafter. The preset times is a preset threshold value of detecting times, and the preset times can be set by user. The preset times is defined as a system default value, when user has not set the preset times.

According to the method for adjusting the intelligent system provided by the embodiment, the times of detecting the unknown portrait information are updated, when unknown portrait information is detected. The preset portrait information is updated based on the unknown portrait information, when the detecting times are greater than the preset times. So that the preset portrait information can be set automatically, and the setting of the preset portrait information is more personalized and intelligent without completely relying on user-defined setting. The range of the preset portrait information is also expanded, and more accurate services can be provided for various types of users.

In addition, in order to achieve the above purpose, the present disclosure also provides a device for adjusting intelligent system, which includes a memory, a processor and a program for adjusting an intelligent system stored on the memory and executable on the processor. The program, when executed by the processor, implements the following operations:
judging whether portrait information matched with preset portrait information exists in an image to be processed on a terminal display interface;
if yes, acquiring a character mode corresponding to the portrait information; and
pushing corresponding content information to the terminal display interface according to the character mode.

Furthermore, the program, when executed by the processor, implements the following operations:
acquiring permission levels respectively corresponding to a current character mode and a target character mode, on condition that a restricted operation request is received; and
in response to the permission level of the current character mode higher than that of the target character mode, acquiring restriction information corresponding to the restriction operation request, and determining that the current character mode is the target character mode on condition that the restriction information exists in the content information corresponding to the current character mode, and the operation of pushing corresponding content information to the terminal display interface according to the character mode includes: pushing second content information corresponding to the target character mode to the terminal display interface.

Furthermore, the program, when executed by the processor, implements the following operations:
acquiring operation permission information of the current character mode and the target permission information of the target character mode corresponding to the restriction operation request, on condition that the restriction operation request is received; and
acquiring the permission levels respectively corresponding to the current character mode and the target character mode based on the operation permission information and the target permission information.

Furthermore, the program, when executed by the processor, implements the following operations:
pushing first content information corresponding to the character mode to the terminal display interface on condition that the restriction information is determined not existed in the content information corresponding to the character mode; and
pushing second content information corresponding to the character mode to the terminal display interface on condition that restriction information is determined existed in the content information corresponding to the character mode.

Furthermore, the program, when executed by the processor, implements the following operations:
acquiring a latest character mode on condition that no portrait information matched with the preset portrait information exists in the image to be processed; and
pushing the corresponding content information to the terminal display interface according to the latest character mode.

Furthermore, the program, when executed by the processor, implements the following operations:
acquiring a matching degree of first portrait information in the image to be processed and the preset portrait information; and
determining that portrait information matching with the preset portrait information exists in the image to be processed, when the matching degree is greater than a preset matching degree.

Furthermore, the program, when executed by the processor, implements the following operations:
acquiring the preset portrait information on condition that the first portrait information is determined existed in the image to be processed; and
acquiring the matching degree of the first portrait information and the preset portrait information based on the preset portrait information.

Furthermore, the program, when executed by the processor, implements the following operations:
updating times of detecting unknown portrait information on condition that the unknown portrait information is detected; and
updating the preset portrait information based on the unknown portrait information, on condition that a quantity of the times of the detecting unknown portrait information is greater than a preset quantity.

In addition, in order to achieve the above objective, the present disclosure also provides a computer readable storage medium, on which a program for adjusting intelligent system is stored. The program, when executed by the processor, implements the following operations:
judging whether portrait information matched with preset portrait information exists in an image to be processed on a terminal display interface;
if yes, acquiring a character mode corresponding to the portrait information; and
pushing corresponding content information to the terminal display interface according to the character mode.

Furthermore, the program, when executed by the processor, implements the following operations:
acquiring permission levels respectively corresponding to a current character mode and a target character mode, on condition that a restricted operation request is received; and
in response to the permission level of the current character mode higher than that of the target character mode, acquiring restriction information corresponding to the restriction operation request, and determining that the current character mode is the target character mode on condition that the restriction information exists in the content information corresponding to the current character mode, and the operation of pushing corresponding content information to the terminal display interface according to the character mode includes: pushing second content information corresponding to the target character mode to the terminal display interface.

Furthermore, the program, when executed by the processor, implements the following operations:
acquiring operation permission information of the current character mode and the target permission information of the target character mode corresponding to the restriction operation request, on condition that the restriction operation request is received; and
acquiring the permission levels respectively corresponding to the current character mode and the target character mode based on the operation permission information and the target permission information.

Furthermore, the program, when executed by the processor, implements the following operations:
pushing first content information corresponding to the character mode to the terminal display interface on condition that the restriction information is determined not existed in the content information corresponding to the character mode; and
pushing second content information corresponding to the character mode to the terminal display interface on condition that restriction information is determined existed in the content information corresponding to the character mode.

Furthermore, the program, when executed by the processor, implements the following operations:
acquiring a latest character mode on condition that no portrait information matched with the preset portrait information exists in the image to be processed; and
pushing the corresponding content information to the terminal display interface according to the latest character mode.

Furthermore, the program, when executed by the processor, implements the following operations:
acquiring a matching degree of first portrait information in the image to be processed and the preset portrait information; and
determining that portrait information matching with the preset portrait information exists in the image to be processed, when the matching degree is greater than a preset matching degree.

Furthermore, the program, when executed by the processor, implements the following operations:
acquiring the preset portrait information on condition that the first portrait information is determined existed in the image to be processed; and
acquiring the matching degree of the first portrait information and the preset portrait information based on the preset portrait information.

Furthermore, the program, when executed by the processor, implements the following operations:
updating times of detecting unknown portrait information on condition that the unknown portrait information is detected; and
updating the preset portrait information based on the unknown portrait information, on condition that a quantity of the times of the detecting unknown portrait information is greater than a preset quantity.

It needs to be noted that in the present disclosure, the terms "comprising", "including" or other variants aim to cover non-exclusive inclusion, such that the processes, methods, articles or devices including a series of factors not only include these factors, but also include other factors not listed explicitly, or further comprise include intrinsic for such processes, methods, articles or devices. In the absence of more limitations, the factors limited by "comprising a ....." do not exclude that additional identical factors are also included in the processes, methods, articles or devices comprising said factors.

The sequence number in the above embodiments of the present disclosure is only for the purpose of explanation and not intended to indicate the merits of the embodiments.

Through above description of the embodiments, it should be understood by those skilled in the art that the present disclosure may be implemented by means of software in connection with necessary universal hardware platform. Of course, the present disclosure may also be implemented by a hardware. However, in many cases the former is more preferred. Based on this understanding, all or the part contributing to the prior art of the technical solution of the present disclosure may be embodied in the form of software. The computer software may be stored in a storage medium (such as ROM/RAM, diskette, or light disk) and include a plurality of instructions which are used to implement the method as described in the various embodiments of the present disclosure by a terminal device (such as a mobile phone, a computer, a server, an air conditioner, or a network device, etc.).

The foregoing description merely portrays some illustrative embodiments according to the disclosure and therefore is not intended to limit the patentable scope of the disclosure. Any equivalent structural or flow transformations that are made taking advantage of the specification and accompanying drawings of the disclosure and any direct or indirect applications thereof in other related technical fields shall all fall in the scope of protection of the disclosure.

## Claims

1. A method for adjusting an intelligent system, **characterized in that** the method comprises the following operations:
judging whether portrait information matched with preset portrait information exists in an image to be processed on a terminal display interface;
if yes, acquiring a character mode corresponding to the portrait information; and
pushing corresponding content information to the terminal display interface according to the character mode.

2. The method according to claim 1, wherein after the operation of acquiring a character mode corresponding to the portrait information, the method further comprises:
acquiring permission levels respectively corresponding to a current character mode and a target character mode, on condition that a restricted operation request is received; and
in response to the permission level of the current character mode higher than that of the target character mode, acquiring restriction information corresponding to the restriction operation request, wherein determining that the current character mode is the target character mode on condition that the restriction information exists in the content information corresponding to the current character mode, and the operation of pushing corresponding content information to the terminal display interface according to the character mode, comprises: pushing second content information corresponding to the target character mode to the terminal display interface.

3. The method according to claim 2, wherein the operation of acquiring permission levels respectively corresponding to a current character mode and a target character mode, on condition that a restricted operation request is received, comprises:
acquiring operation permission information of the current character mode and the target permission information of the target character mode corresponding to the restriction operation request, on condition that the restriction operation request is received; and
acquiring the permission levels respectively corresponding to the current character mode and the target character mode based on the operation permission information and the target permission information.

4. The method according to claim 1, wherein the operation of pushing corresponding content information to the terminal display interface according to the character mode, comprises:
pushing first content information corresponding to the character mode to the terminal display interface on condition that the restriction information is determined not existed in the content information corresponding to the character mode; and
pushing second content information corresponding to the character mode to the terminal display interface on condition that restriction information is determined existed in the content information corresponding to the character mode.

5. The method according to claim 1, wherein after the operation of judging whether there is portrait information matching with preset portrait information in the image to be processed, the method further comprises:
acquiring a latest character mode on condition that no portrait information matched with the preset portrait information exists in the image to be processed; and
pushing the corresponding content information to the terminal display interface according to the latest character mode.

6. The method according to claim 1, wherein the operation of judging whether portrait information matched with preset portrait information exists in an image to be processed, comprises:
acquiring a matching degree of first portrait information in the image to be processed and the preset portrait information; and
determining that portrait information matching with the preset portrait information exists in the image to be processed, on condition that the matching degree is greater than a preset matching degree.

7. The method according to claim 6, wherein the operation of acquiring a matching degree of first portrait information in the image to be processed and the preset portrait information, comprises:
acquiring the preset portrait information on condition that the first portrait information is determined existed in the image to be processed; and
acquiring the matching degree of the first portrait information and the preset portrait information based on the preset portrait information.

8. The method according to claim 1, wherein the operation of acquiring the preset portrait information when it /is determined that first portrait information exists in the image to be processed, comprises:
updating times of the detecting unknown portrait information on condition that the unknown portrait information is detected; and
updating the preset portrait information based on the unknown portrait information, on condition that a quantity of the times of the detecting unknown portrait information is greater than a preset quantity.

9. A device for adjusting an intelligent system, **characterized in that** the device comprises: a memory, a processor, and a program for adjusting intelligent system stored on the memory and executable on the processor, the program, when executed by the processor, implements the following operations:
judging whether portrait information matched with preset portrait information exists in an image to be processed on a terminal display interface;
if yes, acquiring a character mode corresponding to the portrait information; and
pushing corresponding content information to the terminal display interface according to the character mode.

10. The device according to claim 9, wherein the program, when executed by the processor, further implements the following operations:
acquiring permission levels respectively corresponding to a current character mode and a target character mode, on condition that a restricted operation request is received; and
in response to the permission level of the current character mode higher than that of the target character mode, acquiring restriction information corresponding to the restriction operation request, wherein determining that the current character mode is the target character mode on condition that the restriction information exists in the content information corresponding to the current character mode, and the operation of pushing corresponding content information to the terminal display interface according to the character mode comprises: pushing second content information corresponding to the target character mode to the terminal display interface.

11. The device according to claim 10, wherein the program, when executed by the processor, further implements the following operations:
acquiring operation permission information of the current character mode and the target permission information of the target character mode corresponding to the restriction operation request, on condition that the restriction operation request is received; and
acquiring the permission levels respectively corresponding to the current character mode and the target character mode based on the operation permission information and the target permission information.

12. The device according to claim 9, wherein the program, when executed by the processor, further implements the following operations:
pushing first content information corresponding to the character mode to the terminal display interface on condition that the restriction information is determined not existed in the content information corresponding to the character mode; and
pushing second content information corresponding to the character mode to the terminal display interface on condition that restriction information is determined existed in the content information corresponding to the character mode.

13. The device according to claim 9, wherein the program, when executed by the processor, further implements the following operations:
acquiring a latest character mode on condition that no portrait information matched with the preset portrait information exists in the image to be processed; and
pushing the corresponding content information to the terminal display interface according to the latest character mode.

14. The device according to claim 9, wherein the program, when executed by the processor, further implements the following operations:
acquiring a matching degree of first portrait information in the image to be processed and the preset portrait information; and
determining that portrait information matching with the preset portrait information exists in the image to be processed, on condition that the matching degree is greater than a preset matching degree.

15. The device according to claim 14, wherein the program, when executed by the processor, further implements the following operations:
acquiring the preset portrait information on condition that the first portrait information is determined existed in the image to be processed; and
acquiring the matching degree of the first portrait information and the preset portrait information based on the preset portrait information.

16. The device according to claim 9, wherein the program, when executed by the processor, further implements the following operations:
updating times of the detecting unknown portrait information on condition that the unknown portrait information is detected; and
updating the preset portrait information based on the unknown portrait information, on condition that a quantity of the times of the detecting unknown portrait information is greater than a preset quantity.

17. A computer readable storage medium, **characterized in that** the computer readable storage stores a program for adjusting intelligent system, the program, when executed by a processor, further implements the following operations:
judging whether portrait information matched with preset portrait information exists in an image to be processed on a terminal display interface;
if yes, acquiring a character mode corresponding to the portrait information; and
pushing corresponding content information to the terminal display interface according to the character mode.

18. The computer readable storage medium according to claim 17, wherein the program, when executed by the processor, further implements the following operations:
acquiring permission levels respectively corresponding to a current character mode and a target character mode, on condition that a restricted operation request is received; and
in response to the permission level of the current character mode higher than that of the target character mode, acquiring restriction information corresponding to the restriction operation request, wherein determining that the current character mode is the target character mode on condition that the restriction information exists in the content information corresponding to the current character mode, and the operation of pushing corresponding content information to the terminal display interface according to the character mode comprises: pushing second content information corresponding to the target character mode to the terminal display interface.

19. The computer readable storage medium according to claim 18, wherein the program, when executed by the processor, further implements the following operations:
acquiring operation permission information of the current character mode and the target permission information of the target character mode corresponding to the restriction operation request, on condition that the restriction operation request is received; and
acquiring the permission levels respectively corresponding to the current character mode and the target character mode based on the operation permission information and the target permission information.

20. The computer readable storage medium according to claim 17, wherein the program, when executed by the processor, further implements the following operations:
pushing first content information corresponding to the character mode to the terminal display interface on condition that the restriction information is determined not existed in the content information corresponding to the character mode; and
pushing second content information corresponding to the character mode to the terminal display interface on condition that restriction information is determined existed in the content information corresponding to the character mode.
